Europäisches Patentamt

European Patent Office

Office européen des brevets

(11) Veröffentlichungsnummer: **0 166 127**
**A1**

## (12) EUROPÄISCHE PATENTANMELDUNG

(21) Anmeldenummer: **85105432.0**

(22) Anmeldetag: **03.05.85**

(51) Int. Cl.⁴: **A 23 L 2/16,** A 23 C 3/037,
A 23 L 2/02, A 23 L 2/20,
A 23 L 2/26

---

(30) Priorität: **29.05.84 DE 3419957**

(43) Veröffentlichungstag der Anmeldung: **02.01.86**
**Patentblatt 86/1**

(84) Benannte Vertragsstaaten: **AT CH FR GB LI SE**

(71) Anmelder: **W. Schmidt GmbH & Co. KG, Pforzheimer Strasse 46, D-7518 Bretten (DE)**

(72) Erfinder: **Dimitriou, Michael, Dipl.-Ing., Otto-Hahn-Strasse 86, D-7518 Bretten (DE)**

(74) Vertreter: **Brommer, Hans Joachim, Dr.-Ing. et al, Patentanwälte Dipl.-Ing. R. Lemcke Dr.-Ing. H.J. Brommer Amalienstrasse 28 Postfach 4026, D-7500 Karlsruhe 1 (DE)**

---

(54) **Verfahren zur Rückverdünnung von Frucht- und Gemüsesaftkonzentraten.**

(57) Die Erfindung betrifft ein Verfahren zur Rückverdünnung von Frucht- und Gemüsesaftkonzentraten, bei dem das zuzuführende Wasser in Form von Sattdampf in das Konzentrat injiziert wird. Die Rückverdünnung wird dadurch in einem Verfahrensschritt und im selben Apparat mit einer Entkeimung kombiniert.

EP 0 166 127 A1

0166127

PATENTANWÄLTE
DIPL.-ING. R. LEMCKE
)R.- ING. H. J. BROMMER
AMALIENSTRASSE 28
7500 KARLSRUHE 1
TEL.: 0721 / 28778-9

W. Schmidt GmbH & Co. KG
Pforzheimer Straße 46
7518 Bretten

Verfahren zur Rückverdünnung von Frucht-
und Gemüsesaftkonzentraten
===========================================

Bei zahlreichen Frucht- und Gemüsesäften ist es üblich,
sie im Erzeugerland zu einem Konzentrat zu verarbeiten.
Man spart dadurch Transport- und Lagerungskosten. Außerdem ist das Konzentrat wegen des wesentlich höheren
Zuckergehaltes, Säuregehaltes etc. im allgemeinen haltbarer als der Saft selbst und kann daher ohne großen
Aufwand für längere Zeit eingelagert werden. Die Rückverdünnung erfolgt meist im Verbraucherland. Man verwendet
hierzu Mischtanks, in denen das Konzentrat mit entkeimtem und entmineralisiertem Wasser wieder auf die Ursprungskonzentration verdünnt wird. Um eine homogene Vermischung,
also eine gleichbleibende Saftqualität sicherzustellen, werden meist Rührwerke eingesetzt.

Nach der Rückverdünnung muß der Saft im allgemeinen
einer Pasteurisationsbehandlung unterzogen werden, damit
er die gewünschten Haltbarkeitsanforderungen erfüllt.
Die Pasteurisation erfolgt zweckmäßig in Plattenwärmeaustauschern.

Hiervon ausgehend, liegt die Aufgabe der vorliegenden
Erfindung darin, ein Verfahren anzugeben, durch das nicht
nur die Rückverdünnung, sondern auch die Entkeimung des
Konzentrates wesentlich vereinfacht wird.

Diese Aufgabe wird erfindungsgemäß dadurch gelöst, daß
zumindest ein Teil des dem Konzentrat zuzuführenden Wassers in Form von Sattdampf in das Konzentrat injiziert
wird.

Durch die Zuführung des Wassers in Dampfform ergibt sich
der Vorteil, daß die Rückverdünnung kombiniert wird mit
einer gleichzeitig stattfindenden Entkeimung. Beide Behandlungsschritte werden im selben Apparat durchgeführt.
Die bisher notwendige Mischanlage entfällt und der Aufwand für die Gesamtanlage wird sowohl kostenmäßig wie
auch vom Platzaufwand her wesentlich reduziert. Die Entkeimung kann je nach der Höhe der Dampftemperatur und
der Einwirkzeit als Pasteurisation oder als Sterilisation
durchgeführt werden.

Zwar ist es bei der Konservierung von Milch und Milchprodukten bekannt, eine Dampfinjektion durchzuführen. Dabei handelt es sich aber um eine reine Pasteurisation oder Sterilisation ohne Rückverdünnung.

Um während der Rückverdünnung keine Geschmacksbeeinträchtigung des Produktes durch die Dampfzufuhr zu riskieren, empfiehlt es sich, die Verweilzeit des Produktes in der Injektionskammer oder einer nachgeschalteten Haltezone zwischen 1/10 sec bis etwa 5 sec zu wählen, je nachdem, welche Temperatur der injizierte Sattdampf hat.

Aus demselben Grund empfiehlt es sich, daß das Produkt sofort nach der vorgegebenen Verweilzeit rasch heruntergekühlt wird.

Im Normalfall wird das Produkt nach der Rückverdünnung in der Injektionskammer noch nicht die Konzentration des Originalsaftes erreicht haben. In diesem Fall ist es besonders zweckmäßig, die Abkühlung des Produktes durch direkte Vermischung mit Kühlwasser herbeizuführen. Die Kühlung wird also mit der restlichen Rückverdünnung kombiniert. Dies hat den Vorteil, daß man eine hohe Temperaturänderungsgeschwindigkeit erzielt und daß sich die gesamte Wärmebehandlung durch ein nahezu rechtwinkliges Temperatur-Zeit-Profil auszeichnet. Die Wärmeeinwirkung wird also auf das zur Entkeimung notwendige Mindestmaß beschränkt und das Produkt optimal geschont.

Selbstverständlich kann in Ergänzung oder alternativ hierzu das Herunterkühlen des Produktes auch durch einen Wärmetauscher erfolgen.

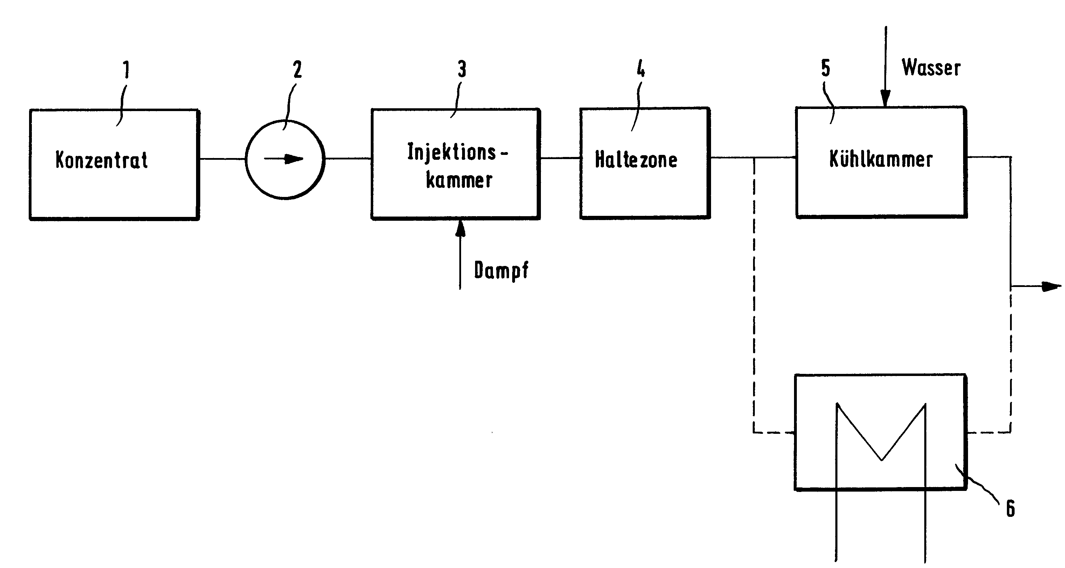

Weitere Merkmale der Erfindung ergeben sich aus der nachfolgenden Beschreibung eines Ausführungsbeispieles anhand der Zeichnung; sie zeigt ein Fließschema der kombinierten Rückverdünnung und Entkeimung.

Aus einem Vorratsbehälter 1 wird das **Konzentrat mittels** einer Pumpe 2 in eine Injektionskammer 3 gefördert. In diese Injektionskammer wird Sattdampf einer Temperatur oberhalb 110°C mit einem Druck von 2 bis 4 bar eingeschossen, wobei es zu einer innigen Vermischung und Verwirbelung mit dem Produkt kommt.

Je nach den gewünschten Entkeimungsbedingungen kann das Produkt sodann eine Haltezone 4 durchströmen, so daß es einige Sekunden auf der Pasteurisations- bzw. Sterilisationstemperatur gehalten wird. Anschließend erfolgt die Rückkühlung des Produktes auf etwa Raumtemperatur, und zwar zweckmäßig in einer Kühlkammer 5 durch direkte Vermischung mit keimfreiem und entmineralisiertem Wasser, dessen Qualität den Leitsätzen des deutschen Lebensmittelbuches entspricht.

Das erfindungsgemäße Verfahren eignet sich nicht nur für Frucht- und Gemüsesaftkonzentrate, sondern allgemein für die Rückverdünnung pumpfähiger Lebensmittelkonzentrate. Es wird daher auch für diesen allgemeineren Produktbereich Schutz begehrt, außerdem auch für die Möglichkeit, mit leicht überhitztem Dampf anstelle von Sattdampf zu arbeiten.

0166127

Da sowohl die Erhitzung in der Injektionskammer 3 wie auch
die Abkühlung in der Kühlkammer 5 durch direkte Stoffvermischung erfolgt, ist ein für die Produktschonung maßgeblicher, steiler Temperaturgradient und somit eine optimale Produktschonung in beiden Behandlungsstufen sichergestellt.

Von der Kühlkammer aus strömt das Produkt schließlich in
eine nicht näher dargestellte Abfüllanlage.

Selbstverständlich kann zusätzlich oder alternativ zur
Kühlkammer 5 noch ein Plattenwärmetauscher 6) vorgesehen
sein, insbesondere für den Fall, daß das in der Kühlkammer zugeführte Wasser noch nicht zum völligen Herunterkühlen ausreicht.

Zusammenfassend liegt der Vorteil der Erfindung darin,
daß man die bisher getrennt vorzunehmenden Behandlungsstufen Rückvermischen und Entkeimen in einem einzigen
Verfahrensgang und im selben Apparat kombiniert und daß
man durch hohe Temperaturänderungsgeschwindigkeiten ein
nahezu rechteckiges Temperatur-Zeit-Profil und damit eine
optimale Produktschonung erzielt.

0166127

PATENTANWÄLTE
**DIPL.-ING. R. LEMCKE**
**DR.- ING. H. J. BROMMER**
AMALIENSTRASSE 28
7500 KARLSRUHE 1
TEL.: 0721 / 28778 -9


W. Schmidt GmbH & Co. KG
Pforzheimer Straße 46
7518 Bretten


Patentansprüche
===================


1. Verfahren zur Rückverdünnung von Frucht- und Gemüsesaftkonzentraten,
dadurch gekennzeichnet,
daß zumindest ein Teil des zuzuführenden Wassers in Form
von Sattdampf in das Konzentrat injiziert wird.


2. Verfahren nach Anspruch 1, dadurch gekennzeichnet,
daß die mittlere Verweilzeit des Produktes in der Injektionskammer oder einer nachgeschalteten Haltezone bei
1/10 sec bis 5 sec liegt.


3. Verfahren nach Anspruch 1 oder 2, dadurch gekennzeichnet, daß das Produkt unmittelbar nach der vorgegebenen
Verweilzeit heruntergekühlt wird.


4. Verfahren nach Anspruch 3, dadurch gekennzeichnet,
daß das Herunterkühlen durch direkte Vermischung des
Konzentrates mit Kühlwasser erfolgt.

0166127

5. Verfahren nach einem der vorhergehenden Ansprüche, dadurch gekennzeichnet, daß die Rückverdünnung in der Injektionskammer mit Sattdampf einer Temperatur oberhalb 110°C erfolgt.

0166127

1/1

Konzentrat — 1

2

Injektions-kammer — 3

Dampf

Haltezone — 4

Wasser

Kühlkammer — 5

6

Europäisches
Patentamt

**EUROPÄISCHER RECHERCHENBERICHT**

0166127
Nummer der Anmeldung

EP 85 10 5432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| P,A | GB-A-2 137 070 (R. TOTEROTOT)<br><br>* Zusammenfassung; Ansprüche 1,4 *<br><br>--- | | A 23 L 2/16<br>A 23 C 3/037<br>A 23 L 2/02<br>A 23 L 2/20<br>A 23 L 2/26 |
| A | FR-A-1 289 558 (SOCIETE DES ALCOOLS DE L'OUEST)<br>* Anspruch 1 *<br><br>----- | | |

RECHERCHIERTE
SACHGEBIETE (Int. Cl.4)

A 23 L 2/00
A 23 C 3/00

Der vorliegende Recherchenbericht wurde für alle Patentansprüche erstellt.

| Recherchenort<br>BERLIN | Abschlußdatum der Recherche<br>16-08-1985 | Prüfer<br>SCHULTZE D |
|---|---|---|